(19) **Europäisches Patentamt**

**European Patent Office**

**Office européen des brevets**

(11) **EP 0 953 155 B1**

(12) **EUROPEAN PATENT SPECIFICATION**

(45) Date of publication and mention
of the grant of the patent:
**31.05.2006 Bulletin 2006/22**

(51) Int Cl.:
**G01S 13/00** (2006.01)  **G01S 7/40** (2006.01)
**G01S 7/03** (2006.01)

(21) Application number: **98957329.0**

(22) Date of filing: **16.10.1998**

(86) International application number:
**PCT/US1998/021908**

(87) International publication number:
**WO 1999/019744 (22.04.1999 Gazette 1999/16)**

(54) **RADAR SYSTEM**

RADARSYSTEM

SYSTEME DE RADAR

(84) Designated Contracting States:
**DE FR GB**

(30) Priority: **16.10.1997 US 66025 P**
**20.01.1998 US 71964 P**
**15.10.1998 US 173322**

(43) Date of publication of application:
**03.11.1999 Bulletin 1999/44**

(73) Proprietor: **AUTOMOTIVE SYSTEMS
LABORATORY INC.
Farmington Hills,
Michigan 48331 (US)**

(72) Inventors:
• **FARMER, Michael, E.
West Bloomfield, MI 48331 (US)**
• **JACOBS, Craig, S.
Farmington Hills, MI 48335 (US)**

(74) Representative: **Smith, Samuel Leonard
J.A. Kemp & Co.,
14 South Square,
Gray's Inn
London WC1R 5JJ (GB)**

(56) References cited:
EP-A- 0 258 917     WO-A-96/00910
US-A- 3 256 520     US-A- 3 703 004
US-A- 4 044 357     US-A- 4 725 842
US-A- 4 970 519     US-A- 5 191 337
US-A- 5 861 837

**Description**

TECHNICAL ART

The instant invention generally relates to radar systems and more particularly to systems and methods for mitigating the effect of the leakage of radar energy from the transmitter to the receiver in a continuous wave radar system.

BACKGROUND OF THE INVENTION

A radar system measures the distance and/or velocity of a target by sensing the effects of the interaction of the target with a beam of either continuous or pulsed electromagnetic energy. In a linear frequency modulated continuous wave (LFM CW) radar system, the target is continuously illuminated with electromagnetic energy, the frequency of which is linearly modulated in time in accordance with a periodic pattern. The radar receiver measures the distance to the target from the difference in frequency between the received and transmitted signals. One problem with LFM CW radar systems results from leakage of a portion of the transmitted energy that is directly coupled to the receiver without first interacting with a target so as to alias as a stationary near range target. The strength of this leakage signal can be sufficiently great that sidelobes thereof mask the target return signals. Radar systems that incorporate a single antenna for both transmit and receive are particularly susceptible to such leakage problems.

Some prior art linear frequency modulated continuous wave (LFM CW) radar systems, including many automotive CW applications, use separate antennas for transmitting and receiving the radar signals. While separate antennas substantially reduces the problem of leakage, the primary difficulty with this method is that the use of separate transmit and receive antenna arrays can prohibitively increase the cost and size of the system.

Other prior art CW radar systems remove the leakage component in the received signal by mixing the received signal with a portion of the transmitted signal that has been shifted in phase by a fixed analog delay line. The analog delay line must be correctly matched to the leakage. The problem with this approach is that the delay of fixed analog delay line is not responsive to changes in the leakage that may result from temperature variations, etc. The problem with analog delay lines is compounded in multiple beam aperture (MBA) architecture radar systems, wherein each beam can have a distinct leakage path and correspondingly requires a separately delayed signal to compensate for the associated leakage. With an increasing number of beams, the corresponding number of delay lines and associated high speed switches -- that switch to the correct delay line for the given beam number -- can become prohibitively expensive and cumbersome.

Yet other prior art radar systems attempt to reduce the effect of the leakage signal in the final signal processing stage by either heavily weighting the data prior to Fourier Transform processing or else by ignoring the first N range cells of data from the Fourier Transform. The problems with stronger amplitude weighting of the Fourier transform to reduce the sidelobe levels is that this causes significant broadening of the peaks, which can reduce the system's ability to recognize closely spaced targets and consequently targets close to the radar system (and the host vehicle). Clearly, the problem with ignoring the first N range cells is that for automotive collision prediction and avoidance radars the near range information is vital in estimating the time to collision and the likelihood of collision.

Still yet other systems use a pulsed radar rather than a CW radar, whereby the receiver is gated to ignore the leakage signal. When applied to automotive collision prediction, a pulsed radar system requires very short radar pulses (< 6 nanoseconds) to detect targets at very near range, which short pulses are difficult to transmit with sufficiently high power to detect far range targets. Accordingly, pulsed radar systems are currently not suited for detecting targets at both near and far ranges as necessary for automotive collision prediction.

Document US 4970519 discloses a power canceller circuit for cancelling leakage signal in a CW radar. A portion of the transmitted signal is continuously supplied to a vector modulator, which adjusts the phase and amplitude of a cancelling signal for minimising carrier leakage.

SUMMARY OF THE INVENTION

The instant invention overcomes the above-noted problems by providing a real-time system and method for calibrating and removing the leakage signal in a Linear Frequency Modulated (LFM) Continuous Wave (CW) radar, particularly for automotive applications requiring multiple beam antenna apertures. The actual waveform that is employed is a stepped frequency synthesis of the LFM where every incoming data point corresponds to the response of the environment to that particular frequency value. The calibration is designed to estimate the leakage signal principally due to a common antenna aperture being used for transmitting and receiving radar energy and to provide a means for removing the signal to improve target detectability. The leakage signal results principally from reflection and transmission from internal radar components and imperfections. Since the path traveled by the leakage signal is very short, it is nearly always of significantly higher amplitude (e.g. 40-80 dB) than the actual targets. This has the negative effect of causing the leakage signal to actually mask smaller targets since the Fourier Transform processing of the signal is then dominated by the sidelobes of the leakage which are of roughly equal amplitude of the target. If the estimated leakage signal as a result of the calibration process is incorrect, then the amplitude of the measured leakage signal will grow and the signal may also experience a drift in frequency which will cause it to move in range and now appear as two closely spaced peaks, rather than a single peak. In addition, false targets may appear further out in range due to harmonics generated at the various mixer stages within the radar transmitter subsystem.

For broad area scanning radar systems that may require multiple antenna beams, a leakage signal for each unique path that the radar energy may travel in order to generate the multiple beams must be computed. In addition, the leakage must be computed during each-use since the signal may change due to environmental differences such as large temperature variations. In addition, if debris such as mud is heavily caked on the antenna radome, then it can cause additional reflections, as well as increased attenuation, and this return signal would contribute as yet more effective leakage signal.

In one mode of operation of the instant invention, the leakage calibration process collects the leakage signal in real-time as needed based on the signal amplitude of the residual signal after the assumed leakage is removed. In another mode of operation, the leakage process collects the leakage signal continuously, but at a reduced data rate, for example, every 50-100 scans. In yet another mode of operation, the leakage signals are collected any time there is no significant signal amplitude other than the leakage within a given antenna beam, which provides the advantage that whenever there is no signal the processor has free time to perform the calibration since it is not processing reports. The calibration process involves collecting a number of instances of the leakage signal and generating an average signal to be used as the leakage calibration signal. In one embodiment, the collected leakage signal is then optimally combined with the previous leakage template through the use of a recursive linear estimator, namely a Kalman Filter on each data point in the LFM waveform.

In a hybrid analog/digital embodiment of the instant invention, the leakage signal is converted back to analog form and then subtracted from the incoming radar signal containing leakage and target information. The difference signal is then scaled with a variable gain, providing for a much larger system dynamic range than for prior art systems.

Accordingly, one object of the instant invention is to provide an improved means for storing and removing a leakage signal for each beam of an MBA architecture radar system.

A further object of the instant invention is to provide an improved means for ability to operating a radar system unattended over long periods of time and to overcome changes in the operating characteristics of the radar system due to environmental changes, system fatigue or non-critical parts failure which may change the system operating characteristics slightly and cause the leakage removal to be sub-optimal.

A yet further object of the instant invention is to provide an improved means for gathering the leakage signal information without placing the radar in a special operating mode that would preclude performing its required function of collision prediction.

A yet further object of the instant invention is to provide an optimal means for calibrating and removing the leakage signa.

A yet further object of the instant invention is to provide improved target detectability.

In accordance with these objectives, one feature of the instant invention is that the leakage signals are pre-computed and stored digitally in non-destructive memory.

Another feature of the instant invention is that a distinct leakage signal is stored for each distinct radar beam.

Yet another feature of the instant invention is that each distinct radar beam is calibrated separately.

Yet another feature of the instant invention is that the leakage removal process is continually monitored to test the need for re-calibrating the radar system.

Yet another feature of the instant invention is that the leakage removal process is continually operating as a background task within the processor of the radar system.

Yet another feature of the instant invention is that a dynamic calibration is performed as needed based upon the amplitude of the signal from which the leakage is removed, within the a priori known range of frequencies associated with the leakage.

Yet another feature of the instant invention is that if or when a re-calibration is required the system performs this function with no interruption of the system's primary mode of operation.

Yet another feature of the instant invention is that the newly acquired leakage data is optimally combined with the stored leakage data through optimal linear estimation techniques, namely Kalman filtering, based on the noise statistics of the specific radar and the previously modeled behavior of the system concerning leakage stability due to stability of the various components.

Yet another feature of the instant invention is the incorporation of a variable gain amplifier to maximize the signal strength of each beam of the MBA antenna array.

Yet another feature of the instant invention is that the system can use lower resolution analog to digital converters for equal or improved system performance.

Yet another feature of the instant invention is that the system tracks the time variation of the leakage digitally and then converts this to analog form for removal from the incoming signal.

Yet another feature of the instant invention is that leakage is removed individually for each beam and each beam's signal is scaled to the same amplitude to maximize the dynamic range for each beam and thereby improve overall target detectability.

The specific features of the instant invention provide a number of associated advantages. One advantage of the instant invention with respect to the prior art is that by incorporating a digitally stored leakage signal there is no need for expensive and bulky delay lines for each beam nor is there a need for high speed RF switches to activate each of the delay lines.

Another advantage of the instant invention is that the associated calibration process requires no change in radar behavior and no operator intervention.

Yet another advantage of the instant invention is that even without a properly calibrated leakage signal, the system continues to operate, although in a slightly degraded mode, until the calibration is completed and the leakage is more fully removed.

Yet another advantage of the instant invention is that with dynamic testing of leakage performance, the system can readily self-adapt as environmental or operational characteristics of the radar change.

Yet another advantage of the instant invention is that with continuous leakage tracking and updating, the system can readily self-adapt as environmental or operational characteristics of the radar change.

Yet another advantage of the instant invention is that with conversion to analog form, analog subtraction, and analog gain, there is less noise due to quantization error.

Another advantage of the instant invention is that the system dynamic range can be improved by increasing the number of bits used in the digital to analog converter.

Yet another advantage of the instant invention is that the number of bits used in the analog to digital converter can be decreased without changing the noise due to quantization error, which provides for reduced system cost.

Yet another advantage of the instant invention is that by not interrupting the normal mode of operation of the system, the predictive collision radar sensor is able to continuously protect the vehicle and its passengers.

Yet another advantage of the instant invention is that by optimally combining the incoming data with the existing data the leakage removal process provides optimal target signal detectability and improved overall system performance.

Yet another advantage of the instant invention is that the associated radar system is relatively immune to environmental influences such as temperature, weather, and debris on radome etc.

Yet another advantage of the instant invention is that the system can collect leakage data even in the presence of targets.

The digital storage of the leakage signal provides a highly flexible and tunable system that can self-adapt to changes in the radar hardware environment that may lead to leakage signal characteristic changes. Further, the ability to continuously change the leakage and the ability to re-compute that leakage signal without interrupting the normal processing of the system provides for a very robust and reliable system as is required for automotive collision prediction.

These and other objects, features, and advantages of the instant invention will be more fully understood after reading the following detailed description of the preferred embodiment with reference to the accompanying drawings and viewed in accordance with the appended claims. While this description will illustrate the application of the instant invention in automotive collision prediction, it will be understood by one with ordinary skill in the art that the instant invention can also be applied to other radar applications where multiple beam apertures are operating in a CW mode of operation.

BRIEF DESCRIPTION OF THE DRAWINGS

FIG. 1 illustrates a block diagram of the instant invention.

FIG. 2 illustrates a block diagram of signal processing in accordance with a first embodiment of the instant invention.

FIG. 3 illustrates a block diagram of signal processing in accordance with a second embodiment of the instant invention.

FIG. 4 illustrates the time domain characteristics of the leakage signal.

FIG. 5 illustrates the values of the Kalman gain matrix over time.

FIG. 6 illustrates a radar return amplitude scan corrupted by leakage.

FIG. 7 illustrates a radar return signal after removal of the leakage component in accordance with the instant invention.

DETAILED DESCRIPTION OF THE PREFERRED EMBODIMENT(S)

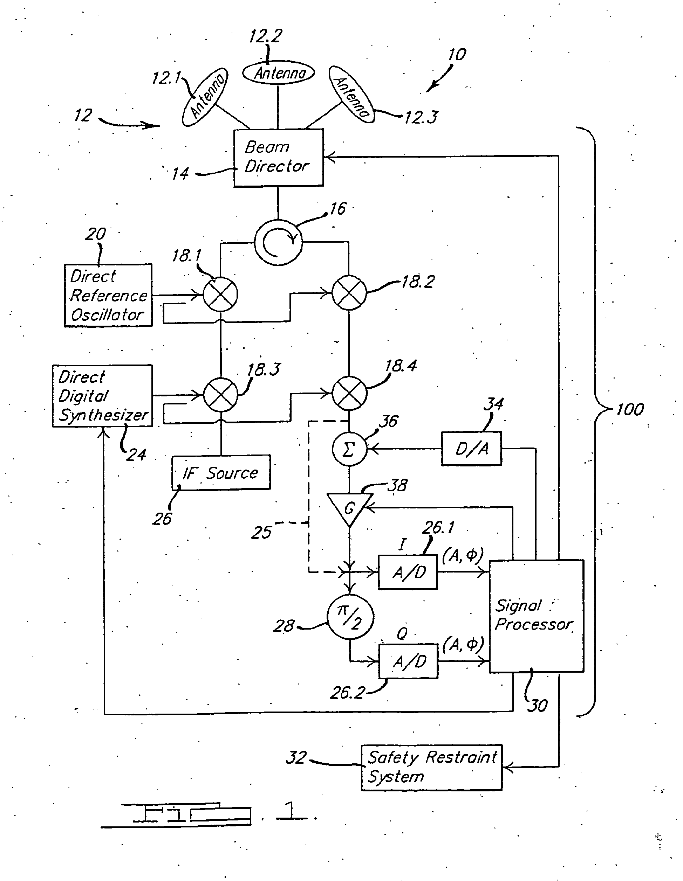

Referring to **Fig. 1**, a **radar system 10** incorporates a **direct digital synthesizer (DDS) 24** to synthesize a specific sequence of frequencies under the control of **a signal processor** 30. The **direct digital synthesizer 24** varies the generated frequencies very quickly, for example, by changing frequency within 40-100 nanosecond intervals. The **direct digital synthesizer 24** may be developed from a single custom broadband device or from an off-the-shelf narrow band synthesizer with a comb filter network of offset frequencies which covers the entire desired frequency band, as is well understood by one having ordinary skill in the art. An **intermediate frequency (IF) source 26** is mixed with the output of the **direct digital synthesizer 24** by a **mixer 18.3**, and the output from the **mixer 18.3** is further up-converted by mixing with the output from a **direct reference oscillator (DRO) 20**, or a Gunn diode, by a **mixer 18.1** so as to produce an RF transmission signal having a frequency of approximately 47 GHz. The RF transmission signal passes through a **circulator 16 into an antenna beam director 14** under control of the **signal processor 30** which causes the signal to be transmitted by one or more of one or more **antennas 12.1, 12.2,12.3** so as to illuminate a region of interest proximate the **vehicle 3**. Either a plurality of fixed **antennas 12.1, 12.2, 12.3**, a single moveable antenna, or a phased array antenna may be incorporated without departing from the instant invention.

The transmitted signal is reflected from one or more either fixed or moving targets, and then received by the **antenna system 12**. The received signal is then directed by the **circulator 16** to a **mixer 18.2** which down-converts the signal by mixing with the output from a **direct reference oscillator 20,** and the down-converted signal is mixed with the output of the **direct digital synthesizer 24** by a **mixer 18.4** where it is further down converted so as to form a modulated IF radar signal.

In a first embodiment of the instant invention by which the leakage is calibrated and removed by purely digital means, the modulated IF radar signal follows **path 25** and is phase shifted by a **quadrature phase shifter 28,** and both the modulated IF radar signal and the quadrature phase shifted version thereof are sampled by respective **Analog to Digital converters 26.1, 26.2** (ADC) so as to provide the signal processor **30** with a complex measure comprising the amplitude and phase $(A,\phi)$ of the modulated IF radar signal.

In a second embodiment of the instant invention by which the leakage is compensated by a hybrid analog/digital means, a digital form of a leakage signal from **the signal processor 30** is converted to analog form by a **Digital to Analog converter 34** (DAC) and subtracted from the modulated IF radar signal, for example, using a **differential amplifier 36.** The resultant signal is scaled by an **amplifier 38,** the gain of which is under control of the **signal processor 30.** The scaled signal is then phase shifted by a **quadrature phase shifter 28,** and both the scaled signal and the quadrature phase shifted version thereof are sampled by respective **Analog to Digital converters 26.1, 26.2** so as to provide the **signal processor 30** with a complex measure comprising the amplitude and phase $(A,\phi)$ of the modulated IF radar signal.

In both embodiments, the signal processor detects the range and velocity of targets within the field of view of the **radar system 10** and predicts whether or not a collision will occur, and if so, sends an appropriately time signal to control the activation of the **safety restraint system 32** so as to mitigate injury to the occupant.

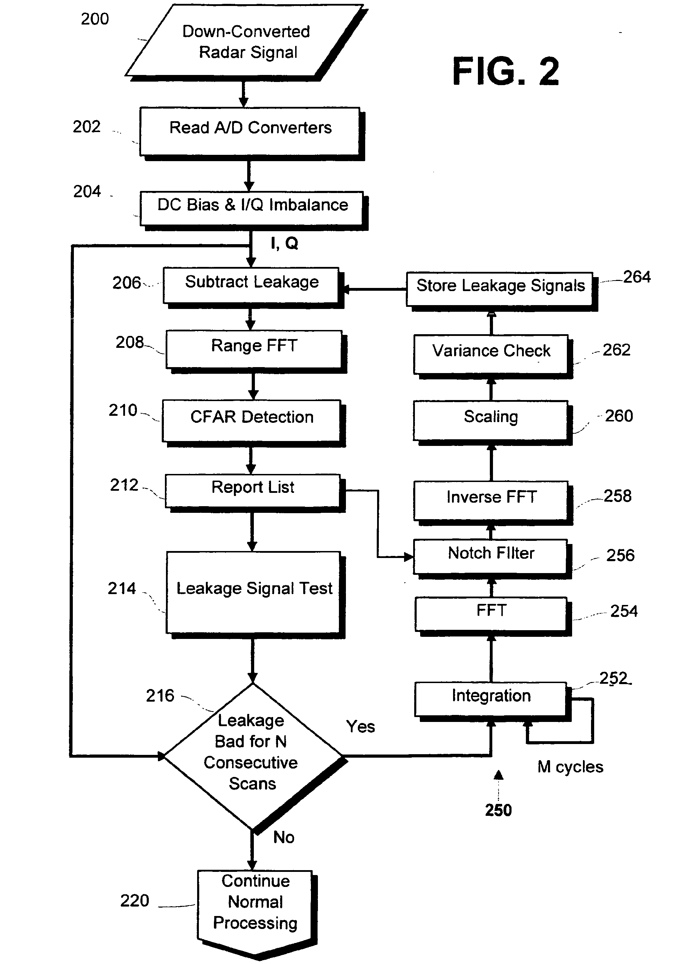

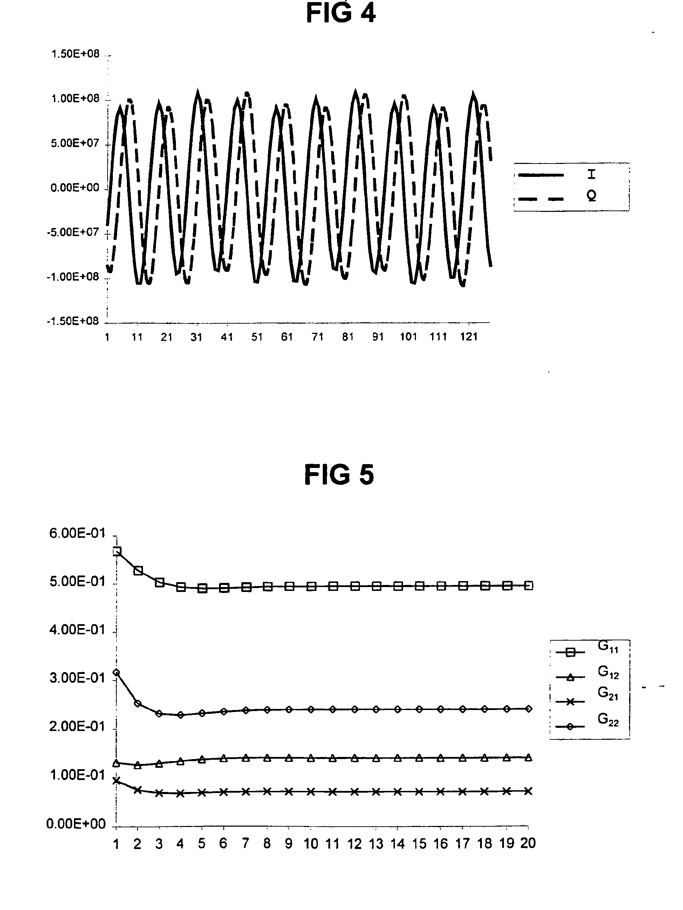

Referring to **Fig. 2,** illustrating a block diagram of signal processing in accordance with a first embodiment of a fully digital dynamic leakage calibration and removal system in a LFM-CW automotive radar system, the down-converted radar signal **200** from the second **mixer 18.4,** and a phase shifted version thereof, are converted in step **202** by **ADC's 26.1,** 26.2 to form the in-phase (I) and quadrature-phase (Q) signals. In step 204, the DC bias and I/Q imbalance is removed so as to provide the I and Q waveforms corresponding to the associated down-converted radar signal **200,** as illustrated in **Fig. 4.**

The down-converted radar signal comprises the sum of the leakage signal with the received radar return signal. The received radar return signal is Doppler shifted by moving targets. The leakage signal however has a constant frequency that is the same as the transmit frequency, as for the radar return from stationary targets, but generally with a much stronger magnitude than radar return signals.

Pre-computed leakage signals for each beam location of the multi-beam radar system are initially stored with the program code in EPROM in the form of the associated I and Q waveforms - a separate leakage signal for each beam location. The leakage signals are inherently synchronized with the associated radar carrier and chirp signals because of the coherency resulting from direct digital synthesis thereof. The **signal processor 30** subtracts the complex I/Q waveforms of the leakage signal from the incoming In-phase and Quadrature-phase sampled complex I/Q radar signal in step **206** and performs traditional LFM waveform processing, consisting of Fast Fourier Transform (FFT) in step **208** and Constant False Alarm Rate (CFAR) detection processing in step **210**. The process of CFAR detection is known to those of ordinary skill in the art, for example, as described in "Radar CFAR Thresholding in Clutter and Multiple Target Situations" by Hermann Rholing in IEEE Transactions on Aerospace and Electronic Systems, Vol. AES-19, No. 4, July 1983, which is incorporated herein by reference. The output of the CFAR detector is a list of possible target reports **212**, which includes:

1. range cell location
2. beam number of active beam in the associated multi-beam system
3. amplitude of signal
4. amplitude of background

The leakage signal is tested in step **214** by a leakage tester which is preset to know the possible range cell locations of the leakage signal, based on the fact that the leakage location is roughly constant, to within 1-2 range cells, for a specific radar hardware configuration. The tester analyzes both the amplitude and the modality of the leakage signal. For example, the amplitude of the leakage signal in range space (after FFT) is compared with a threshold of approximately 5 dB, wherein a rise greater than the threshold indicates an incorrect leakage signal. Also, for example, the modality of the leakage signal is tested using $3^{rd}$ order moments in FFT amplitude space. If the leakage signal being used is incorrect, the amplitude of the leakage will grow and the signal may also experience a drift in frequency causing it to move in range and now appear as two closely spaced peaks, rather than a single peak.

If the resultant leakage report is within tolerance, then the system continues with normal operation and nothing is done. If the leakage report appears out of tolerance, then a leakage tolerance flag is set. If this flag is set m-of-N times on the next N times the radar uses a particular beam, then in step **216** the system is flagged to begin a new beam calibration. The values of m and N are typically chosen to be 3-of-4. Alternatively, a calibration may be automatically rescheduled every 100 scans. The system uses the latest valid leakage signal for processing incoming radar signals.

If the system is flagged to begin a new calibration, then on the next pass of the radar for the particular beam, the raw I/Q radar data is directed through both the normal processing chain, as well as into the leakage calibration process **250.** In **step 252,** a running sum filter averages out any possible thermal Gaussian noise by computing the running sum for each step in the sequential frequency stepped LFM radar signal. This summation process continues at each beam location for M occurrences when the antenna is returned to the particular beam location, where values of M between 25 to 100, for example, provide excellent noise reduction. The running sum is performed independently on the I and Q channels of the complex data to preserve the phase of the resulting leakage signal. This running sum is performed at each time sample of the repetitive LFM waveform kernel (chirp) over the M-plurality of successive waveform cycles. For example, for time sample 1 in the incoming waveform, 25-100 instances of that value are summed together. This processing step then generates an associated averaged waveform that corresponds to the incoming data sequence for each LFM data collection interval.

The averaged waveform is then filtered in steps **254, 256,** and **258** to remove known targets while preserving the main leakage signal and any images of the leakage signal which may be present due to limited image rejection capabilities of the various mixers in the system. Such filtering may be achieved by first, in step **254,** transforming the averaged waveform into range space using a FFT; then, in step **256,** removing the associated targets with a notch filter; and finally, in step **258,** transforming the filtered signal back to the time domain using an inverse FFT. The notch filter in step **256** utilizes the report list **212** from the CFAR detection step **210** to identify the targets for removal from the averaged waveform. Alternatively, this filtering process may be implemented in the time domain.

Generally targets appear as higher frequency signals in the LFM waveform than the leakage signal since they are farther in range than the leakage. If the targets were not removed from the averaged waveform as described hereinabove, then, if the system were stationary and there were other objects in the radar's field of view, these objects would be incorporated into a resulting corrupted leakage signal, and accordingly calibrated out by the system along with the leakage. However, when the system began moving again, the calibration using the corrupted leakage signal would then make a false target appear at that same location for all subsequent scans, because when the corrupted leakage signal is subtracted, the subtraction process effectively adds signal components into the incoming waveform where not otherwise present therein.

The filtered signal is then, in step **260,** scaled to be of unity amplitude to provide for easier scaling in the leakage subtraction logic step **206,** wherein the stored leakage signal is scaled to match the peak value of the incoming I/Q signal before subtraction therefrom.

In conjunction with the calculation of the average waveform in step **252,** variance waveforms of the I and Q channels are computed for use as a diagnostic measure and verify the quality of the leakage signal. The variance of the I and Q channels is checked in step **262** before storing, in step **264,** the computed leakage signal from step **260** as the leakage reference signal, so as to prevent a very poor quality leakage reference signal from being generated if the system is experiencing radar front-end hardware problems. If the variance check fails, for example, as a result of the variance of any point in the variance waveforms being more than 5 times greater than an adjacent point, then the computed leakage signal from step **260** is discarded, and the leakage calibration process **250** is repeated. If after a second attempt the variance signal is still out of tolerance, a diagnostics flag is set and the system enters a self-test mode, for example, by switching the MBA to a non-radiative mode so that the radar system only measures internal leakage.

If, in step **262,** the variance of the leakage signal is within tolerance, then the calculated leakage signal is stored in step **264** as the leakage reference signal for subsequent use in removing leakage from incoming radar signals.

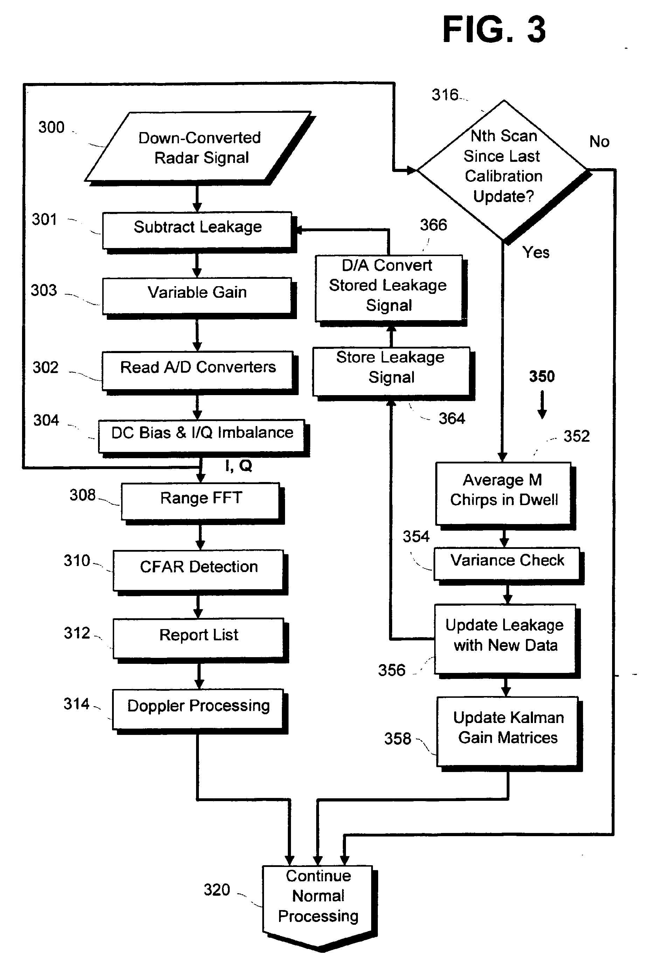

Referring to **Fig. 3,** illustrating a block diagram of signal processing in accordance with a second embodiment of a hybrid analog/digital dynamic leakage calibration and removal system in a LFM-CW automotive radar system, a stored digital leakage signal from step **364** is converted to analog form by a **DAC 34** in step **366.** The system begins normal operation with a pre-computed leakage signal that is stored with the program code in EPROM, wherein a distinct leakage signal is associated with and stored for each beam location. The stored leakage signal from step **366** is subtracted in step **301** from the down-converted radar signal **300,** and the resultant signal is scaled by a variable-gain amplifier in step **303,** wherein the gain thereof is under control of the **signal processor 30** as described hereinbelow. The scaled signal and a quadrature phase shifted version thereof are sampled and converted to the associated digital, complex I/Q signals in steps **302** and **304.** The **signal processor 30** performs traditional LFM waveform processing, consisting of Fast Fourier Transform (FFT) in step **308,** Constant False Alarm Rate (CFAR) detection processing in step **310,** and Doppler processing in step **314** across a set ofN complete LFM waveforms for each range cell that reported a detection. The output of the CFAR detector is a list of possible target reports **312,** which includes:

1. range cell location
2. beam number
3. amplitude of signal
4. amplitude of background
5. Doppler (speed) of target

For every $N^{th}$ scan of incoming radar data, where, for example, N is approximately 100, in step **316,** the leakage calibration process **350** is performed (in addition to normal radar signal processing) to track and update the leakage signal. In step **352,** M chirps comprising a complete radar dwell at a particular beam location are averaged to reduce thermal Gaussian noise, where, for example, M is between 8 and 16 chirps at each beam location (dwell) for adequate noise reduction and Doppler sensitivity and accuracy in the normal radar processing. The average is calculated independently on the I and Q channels of the complex data to preserve the phase of the leakage signal, so as to generate a leakage signal waveform with a length equal to the incoming chirp length, for example, 64-128 points. The average is calculated across the respective chirp waveforms, respective points with in each waveform averaged with one another so as to create an average waveform.

In addition to the above described averaging process, the associated variance waveforms of the I and Q channels are also computed, from which the system, in step **354,** performs diagnostics to verify the quality of the leakage signal by comparing the measured variances to the associated stored variances for the I and Q channels that are used in a Kalman Filter stage. This variance check guards against generating poor quality leakage reference signals, for example, as a result of front-end hardware problems in the radar system. A poor variance causes the system to discard the just computed leakage reference signal and to calculate another. If after a second attempt the variance signal is still out of tolerance a diagnostics flag is set and the system enters a self-test mode.

This averaged I/Q waveform has the appearance of a sinewave as shown in **Fig. 4.** Drifts of the leakage signal tends to cause small perturbations in the associated waveform over time. The instant invention treats each point of this waveform independently and runs a Kalman filter over time on each point using the new incoming data to provide a correction to the existing data in step **356,** after which the associated Kalman Gain matrices are updated in step **358.** The form of the filter is well known to those of ordinary skill in the art as:

$$\text{est\_leak}( i ) = \text{pred\_old\_leak}(i) + \text{Gain} * (\text{signal}(i) - \text{pred\_old\_leak}(i)) \tag{1}$$

and

$$\text{pred\_old\_leak}(i) = S * \text{est\_leak}(i-1) \tag{2}$$

where *est_leak* is the estimated new leakage value, *signal* is the incoming new signal data, *pred_old_leak* is the prediction from the filter of what the leak should be at this new time.i, and the state transition matrix is:

$$S = \begin{pmatrix} 1 & \Delta T \\ 0 & 1 \end{pmatrix} \tag{3}$$

where ΔT is the time between updates.

*est_leak*(i) is a 2 element vector, the first element of which is the In-phase contribution of the signal and the second of which is the Quadrature-phase contribution of the signal. This form takes advantage of the fact that the In-phase portion is proportional to cos(t) and the Quadrature-phase portion is proportional to the sin(t) which is simply the time derivative (or in this application, velocity).

The *Gain* matrix is a 2x2 matrix defined by:

$$Gain = P_{pred} * M^T * (M * P_{pred} * \dot{M}^T + N_M)^{-1} \tag{4}$$

where

$$P_{Pred} = S * P_{est} * S^T + N_S \tag{5}$$

and

$$P_{est} = (I = Gain * M)P_{Pred} \tag{6}$$

where $P_{Pred}$ is the covariance of the Predicted leak value, $P_{est}$ is the covariance matrix for the estimated leak, and *M* is the measurement matrix which is the Identity matrix in this application, as is *I*.

The matrices $N_M$ and $N_S$ are the measurement noise matrix and the system noise matrix respectively, and are given by:

$$N_M = \begin{pmatrix} \sigma_I^2 & 0 \\ 0 & \sigma_Q^2 \end{pmatrix} \tag{7}$$

and

$$N_S = \begin{pmatrix} \sigma_{11}^2 & \sigma_{12}^2 \\ \sigma_{21}^2 & \sigma_{22}^2 \end{pmatrix} \tag{8}$$

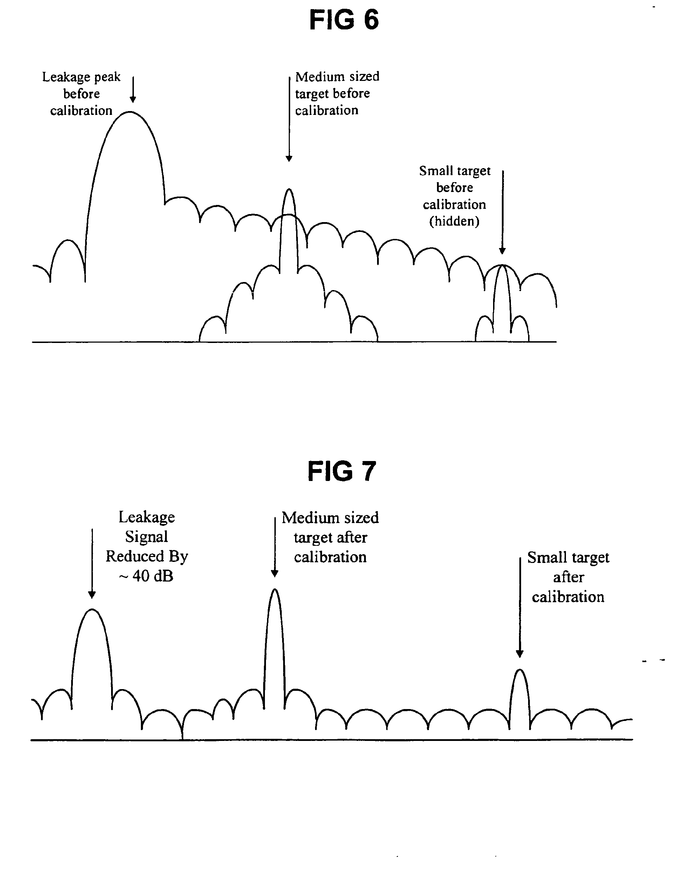

The system noise matrix models the random 'accelerations' (Quadrature derivative) that are driving the system to drift over time. The variances $\sigma_I^2$ and $\sigma_Q^2$ are the respective variances of the I and Q channels that are estimated when the system is developed and compared to the variances of the incoming data in step **354** to ensure performance. The second set of variances in the system noise matrix are determined by modeling the system drift characteristics during development, for example, by sampling the data at hourly intervals, where the indices 1 and 2 of the variances correspond to I and Q respectively. These elements of the system noise matrix can be also be adjusted to tune the system. The system begins with an estimate for these matrices and $P_{est}$ to initiate the processing. $P_{est}$ is estimated during system development based on what the desired *Gain* matrix characteristics should be. The *Gain* matrix changes with each iteration are illustrated in **Fig. 5**, which plots the evolution of each term over time.

One peculiarity of the system that has no impact on the overall performance for a predictive collision application is that if the system were stationary and there were other objects in the radar's field of view, then they would be calibrated out as well. When the system began moving again, the calibration signal would then make a false target appear at that same location for all subsequent scans. This is because when a leakage signal is subtracted, if no corresponding signal is present, then the subtraction process effectively adds the signal into the incoming waveform. This causes no problems with collision predictions since stationary targets (relative to the host vehicle) cannot collide therewith and are therefore no threat. Also these false targets are eventually calibrated out after the next set of scans passes and the leakage calibration process **350** is executed again.

The newly updated leakage signal from step **356** is then, in step **364**, stored in processor memory and subsequently used in place of the EPROM based leakage signal that was factory delivered with the automotive radar system. However, the EPROM is not overwritten, but is instead available to prevent the calibration from "wandering" too far from the factory programmed calibration.

The system dynamic range is cost effectively improved by converting, in step **366,** the stored digital leakage signal from step **364** to an analog signal by a **Digital to Analog Converter 34** (DAC), which is then subtracted, in step **301,** from the down-converted radar signal **300**. The resulting difference signal is amplified in step **303** by a **variable gain amplifier 38** to take advantage of the Analog to Digital Converter's (ADC's) **26.1, 26.2** available dynamic range, so as to decrease the noise due to quantization error and increase the system dynamic range, the improvement bounded by the condition where quantization noise falls below the system noise floor. Increasing the system dynamic range allows smaller targets to be detected by the system.

An ADC's dynamic range, as expressed by the associated signal-to-quantized-noise ratio, is determined by the associated number of bits in the ADC:

$$SQNR_{ADC} = 20 * \log(\frac{P_x}{P_Q}) = 20 * \log\left(\tfrac{3}{2} * 2^{2 \cdot (b+1)}\right) \tag{9}$$

Where:

$$P_X = \frac{A^2}{2} \tag{10}$$

$$P_Q = \frac{A^2/3}{2^{(b+1)}} \tag{11}$$

$P_X$=Power of maximum signal
$P_Q$=Power of a quantization step
A=Amplitude of the maximum signal
b= number of bits

The radar return is composed of 2 signal components, the leakage signal and target signal. The composite signal is $P_c = P_{Leakage} + P_{Target}$. $P_c$ must be set less than or equal to $P_x$ to avoid ADC overflow. If $P_c$ is set equal to $P_x$, then the available SQNR for target detection is decreased by the Leakage-to-Target Ratio (LTR), which is equal to 10*log $(P_{Leakage}/P_{Target})$, which, for example, is typically 40-80 dB.

Converting the leakage signal back to analog form enables an increase in the system's dynamic range available for target detection. The leakage template - the digital form of the leakage calibration signal - power $P_{LT}$ is equal to the power $P_L$ of the leakage minus the quantization error of the DAC:

$$QN_{DAC} = \frac{A_{Leakage}^2/3}{2^{(m+1)}} \tag{12}$$

$$P_{LT} = P_L - QN_{DAC} \tag{13}$$

were m is the number of bits in the DAC.

Subtracting the leakage template signal from the radar composite signal gives:

$$P_{Diff} = P_C - P_{LT} = P_{T\,arg\,et} + QN_{DAC}$$  (14)

The difference signal is amplified by a gain G, and the power of the resulting amplified signal is given by:

$$P_{Gain} = G * \left(P_{T\,arg\,et} + QN_{DAC}\right)$$  (15)

Preferably G is set so that $P_{Gain}$ is equal to the $P_X$ of the ADC.

Notwithstanding that $P_{Leakage}$ is subtracted, the value of the leakage signal is still known, so the system SQNR is equal to

$$SQNR_{System} = \frac{(P_{Leak} * G + P_X)}{P_Q} = G * \tfrac{3}{2} * 2^{2*(b+1)}$$  (16)

If $QN_{DAC}$ is larger than $P_{Target}$, G becomes equivalent to $1/QN_{DAC}$ and SQNR becomes

$$SQNR_{System} = 10 * \log\left(\tfrac{3}{2} * 2^{2*(b+m+1)}\right)$$  (17)

This illustrates that if the sum of the bits in the ADC and DAC, i.e. b+m, in the hybrid embodiment is equal to the number of bits in the ADC, i.e. b, in the corresponding digital embodiment, then the same system signal-to-noise ratio can be achieved with the relatively inexpensive combination of a low resolution ADC and DAC in the hybrid embodiment as can be achieved with a single relatively expensive high resolution ADC in the purely digital embodiment.

For both embodiments of the instant invention, the leakage calibration system is designed to track long term changes in the behavior of the leakage signal. For instance, the variation in temperature that would cause the system to drift out of tolerance can take on the order of a few hours to cause thermal heating sufficient enough to cause the radar assembly to thermally expand out of tolerance. The system, however, can also react on à more rapid basis if, for instance, a large quantity of mud were splashed onto the radar and it affected the characteristics of the radome. Short term effects, such as unusual power surges that may cause the LFM waveform to be corrupted would not affect the leakage calculation since these are either of short duration, or if longer duration, would be flagged by the variance test on the leakage reference signal calculation and would flag the control processing task of the radar of a potential system failure that requires immediate service attention.

As an example of the operation of the instant invention, referring to **Fig. 6**, the original uncompensated leakage signal is shown to dominate the target spectrum. Even medium sized targets are much harder to detect since their amplitude relative to the background is significantly reduced. Smaller targets are completely masked by the background of the leakage signal. Referring to **Fig. 7,** responsive to the instant invention the leakage is reduced significantly by the above described dynamic leakage calibration process, enabling the targets to be much easier to detect relative to the background clutter and noise.

While specific embodiments have been described in detail, those with ordinary skill in the art will appreciate that various modifications and alternatives to those details could be developed in light of the overall teachings of the disclosure. Accordingly, the particular arrangements disclosed are meant to be illustrative only and not limiting as to the scope of the invention, which is to be given the full breadth of the appended claims and any and all equivalents thereof.

**Claims**

**1.** A method of removing leakage in a continuous wave radar system (10), comprising:

a. subtracting (206, 301) at least one signal representative of a leakage signal from a corresponding at least one signal representative of a down-converted radar return signal (200, 300) so as to form a resultant signal, wherein at least one of said at least one signal representative of a down-converted radar return signal (200, 300) and said resultant signal comprises a repetitive sequence of frequencies; **characterized by**

b. evaluating (216, 316) a condition of said resultant signal; and

c. determining from said condition whether or not to perform a leakage calibration (250, 350), wherein said leakage calibration (250, 350) comprises:

i) generating (252-260, 352) an averaged leakage signal;

ii) calculating (262, 354) at least one variance waveform associated with said averaged leakage signal;

iii) comparing (262, 354) at least one measure of said at least one variance waveform with a corresponding at least one threshold; and

iv) storing (264, 364) a signal responsive to said averaged leakage signal, wherein the step of storing is responsive to the step of comparing (262, 354) said at least one measure of said at least one variance waveform with said corresponding at least one threshold.

2. A method of removing leakage in a continuous wave radar system (10) as recited in claim **1**, wherein

a. the step of subtracting (206, 301) said at least one signal representative of leakage signal from said corresponding said at least one signal representative of said down-converted radar return signal (200, 300) comprises:

i). sampling (202) the in-phase (I) and quadrature-phase (Q) components of a down-converted radar return signal (200), each said component comprising an associated waveform comprising a repetitive sequence of frequencies; and

ii). Subtracting (206) the in-phase (I) and quadrature-phase (Q) components of a stored leakage signal to form a resultant signal;

b. the steps of evaluating (216, 316) said condition of said resultant signal and determining from said condition whether or not to perform said leakage calibration (250, 350) comprise:

i) comparing (214) at least one first measure from said resultant signal with a corresponding at least one first threshold; and

ii) performing a leakage calibration (250) if said at least one first measure exceeds said corresponding at least one threshold for m ofN successive samples (216) of said radar return signal (200);

c. the step of generating (250) said averaged leakage signal comprises:

i) calculating (252) a running average of successive said in-phase (I) waveforms of said down-converted radar return signal (200) by averaging (252) respective elements of said repetitive sequence across successive repetitive sequences so as to generate an associated averaged in-phase waveform; and

ii) calculating a running average of successive said quadrature-phase (Q) waveforms of said down-converted radar return signal (200) by averaging (252) respective elements of said repetitive sequence across successive repetitive sequences so as to generate an associated averaged quadrature-phase waveform, said in-phase waveform and said quadrature-phase waveform constituting said averaged leakage signal;

d. the step of comparing at least one measure of said at least one variance waveform with a corresponding at least one threshold comprises:

comparing (262) at least one second measure of said at least one variance waveform with a corresponding at least one second threshold; and

e: the step of storing said signal responsive to said averaged leakage signal comprises:

storing (264) said averaged leakage signal as said stored leakage signal if said at least one second measure of said at least one variance waveform is less than said corresponding at least one second threshold.

3. A method of removing leakage in a continuous wave radar system (10) as recited in claim **2**, wherein said stored leakage signal is initially set to a pre-computed value.

4. A method of removing leakage in a continuous wave radar system (10) as recited in claim **2**, further comprising the step of scaling (260) said stored leakage signal responsive to the magnitude of said down-converted radar return signal (200).

5. A method of removing leakage in a continuous wave radar system as recited in claim 4, wherein said stored leakage signal is scaled (260) to have the same peak magnitude as said down-converted radar return signal (200).

6. A method of removing leakage in a continuous wave radar system (10) as recited in claim **2**, wherein said at least one first measure comprises the maximum amplitude of the leakage component of said resultant signal.

7. A method of removing leakage in a continuous wave radar system (10) as recited in claim **6,** wherein said first measure is tested (254) within a predetermined range of frequencies corresponding to said leakage component of said resultant signal.

8. A method of removing leakage in a continuous wave radar system (10) as recited in claim **2,** wherein said at least one first measure comprises the modality of the leakage component of said resultant signal.

9. A method of removing leakage in a continuous wave radar system (10) as recited in claim **8,** wherein said at least one first threshold comprises the number of closely spaced peaks in the leakage component of said resultant signal.

10. A method of removing leakage in a continuous wave radar system (10) as recited in claim **8,** wherein said at least one first measure comprises the third order moment in the range domain of said leakage component of said resultant signal.

11. A method of removing leakage in a continuous wave radar system (10) as recited in claim **2,** further comprising the step of scaling (260) said averaged leakage signal prior to storing said averaged leakage signal.

12. A method of removing leakage in a continuous wave radar system (10) as recited in claim **10,** wherein said continuous wave radar system (10) is step linear frequency modulated, further comprising the step of processing (208, 210) said down-converted radar return signal (200) so as to measure the range to zero or more targets represented by said radar return signal (200).

13. A method of removing leakage in a continuous wave radar system (10) as recited in claim **10,** wherein the step of processing (208, 210) said down-converted radar return signal (200) comprises the steps of Fast Fourier Transformation (208) and Constant False Alarm Rate detection processing (210).

14. A method of removing leakage in a continuous wave radar system (10) as recited in claim **13,** wherein said Constant False Alarm Rate detection processing step (210) provides at least one measure selected from the group consisting of the range cell location, the radar beam number, the amplitude of said radar return signal (200) and the amplitude of the background of said radar return signal (200).

15. A method of removing leakage in a continuous wave radar system (10) as recited in claim **14,** further comprising the step of removing targets detected by said Constant False Alarm Rate detection processing step (210) from said averaged leakage signal (212, 254-258).

16. A method of removing leakage in a continuous wave radar system (10) as recited in claim **15,** wherein the step of removing targets comprises the steps of Fast Fourier Transforming (254) said averaged leakage signal so as to form a frequency domain signal, notch filtering (256) said frequency domain signal responsive to said targets detected by said Constant False Alarm Rate detection processing step (210) so as to form a notch filtered signal, and inverse Fast Fourier Transforming (258) said notch filtered signal so as form a replacement for said averaged leakage signal.

17. A method of removing leakage in a continuous wave radar system (10) as recited in claim **14,** wherein said step of performing a leakage calibration (250) is performed when no targets are detected in said Constant False Alarm Rate detection processing step (210).

18. A method of removing leakage in a continuous wave radar system (10) as recited in claim **2,** wherein said continuous wave radar system (10) comprises a multiple beam array (12: 12.1, 12.2, 12.3), said stored leakage signal is distinct for each beam location (12.1, 12.2, 12.3) in said multiple beam array (12: 12.1, 12.2, 12.3), and said step of performing a leakage calibration (250) is performed separately for each beam location (12.1, 12.2, 12.3) in said multiple beam array (12: 12.1, 12.2, 12.3).

**19.** A method of removing leakage in a continuous wave radar system (10) as recited in claim **1,** wherein

　　a. the step of subtracting at least one signal representative of leakage signal from said corresponding at least one signal representative of said down-converted radar return signal (300) comprises:

　　　　subtracting (301) a stored leakage signal from a down-converted radar return signal (300) so as to form a resultant signal, wherein said down-converted radar return signal (300) comprises a repetitive sequence of frequencies;

　　b. the steps of evaluating said condition of said resultant signal and determining from said condition whether or not to perform said leakage calibration comprise:

　　　　performing a leakage calibration (350) every $N^{th}$ occurrence (316) of said repetitive sequence of frequencies;

　　c. the step of generating said averaged leakage signal comprises:

　　　　calculating an average of successive resultant signals by averaging (352) respective elements of said repetitive sequence across successive repetitive sequences so as to generate said averaged leakage signal; and

　　d. the step of storing said signal responsive to said averaged leakage signal comprises:

　　　　i) combining said stored leakage signal with said averaged leakage signal in accordance with a Kalman Filter (356) so as to form an updated leakage signal if said at least one measure of said at least one variance waveform is less than said corresponding at least one threshold (354); and
　　　　ii) storing (364) said updated leakage signal as said stored leakage signal.

**20.** A method of removing leakage in a continuous wave radar system (10) as recited in claim **19,** wherein said Kalman Filter (356) is responsive to the noise statistics of the radar system (10).

**21.** A method of removing leakage in a continuous wave radar system (10) as recited in claim **19,** wherein said Kalman Filter (356) is responsive to the leakage stability of the radar system (10).

**22.** A method of removing leakage in a continuous wave radar system (10) as recited in claim **19,** wherein said Kalman Filter (356) is responsive to the stability of the radar system (10).

**23.** A method of removing leakage in a continuous wave radar system (10) as recited in claim **19,** further comprising the step of updating (358) at least one gain matrix of said Kalman Filter (356).

**24.** A method of removing leakage in a continuous wave radar system (10) as recited in claim **1,** wherein

　　a. the step of subtracting at least one signal representative of leakage signal from said corresponding at least one signal representative of said down-converted radar return signal (300) comprises:

　　　　i). converting (366) a stored leakage signal from digital to analog form so as to form an analog leakage signal; and
　　　　ii). subtracting (301) said analog leakage signal from a down-converted radar return signal (300) so as to form a resultant signal;

　　b. the steps of evaluating said condition of said resultant signal and determining from said condition whether or not to perform said leakage calibration comprise:

　　　　i). sampling (302) the in-phase (I) and quadrature-phase (Q) components of said resultant signal, each said component comprising an associated waveform comprising a repetitive sequence of frequencies; and
　　　　ii). performing a leakage calibration every $N^{th}$ occurrence (316) of said repetitive sequence of frequencies;

c. the step of generating said averaged leakage signal comprises:

i) calculating an average of successive said in-phase (I) waveforms of said down-converted radar return signal (300) by averaging (352) respective elements of said repetitive sequence across successive repetitive sequences so as to generate an associated averaged in-phase waveform;
ii) calculating an average of successive said quadrature-phase (Q) waveforms of said down-converted radar return signal (300) by averaging (352) respective elements of said repetitive sequence across successive repetitive sequences so as to generate an associated averaged quadrature-phase waveform, said in-phase waveform and said quadrature-phase waveform constituting said averaged leakage signal; and

d. the step of storing said signal responsive to said averaged leakage signal comprises:

replacing (356, 364) said stored leakage signal with a signal from said averaged leakage signal if said at least one measure of said at least one variance waveform is less than said corresponding at least one threshold.

25. A method of removing leakage in a continuous wave radar system (10) as recited in claim **24,** further comprising the step of scaling (303) said resultant signal.

26. A method of removing leakage in a continuous wave radar system (10) as recited in claim **25,** wherein the step of sampling the in-phase (I) and quadrature-phase (Q) components of said resultant signal includes the step of converting (302) said resultant signal from analog to digital form with at least one analog to digital converter (26.1, 26.2), and the step of scaling (303) said resultant signal is responsive to the dynamic range of said at least one analog to digital converter (26.1, 26.2).

27. A method of removing leakage in a continuous wave radar system (10) as recited in claim **24,** wherein said continuous wave radar system (10) is step linear frequency modulated, further comprising the step of processing said down-converted radar return signal (300) so as to measure (308, 310) the range to zero or more targets represented by said radar return signal (300).

28. A method of removing leakage in a continuous wave radar system (10) as recited in claim **27,** wherein the step of processing said down-converted radar return signal (300) comprises the steps of Fast Fourier Transformation (308) and Constant False Alarm Rate detection processing (310), and said Constant False Alarm Rate detection processing (310) step provides at least one measure selected from the group consisting of the range cell location, the radar beam number, the amplitude of said radar return signal (300) and the amplitude of the background of said radar return signal (300).

29. A method of removing leakage in a continuous wave radar system (10) as recited in claim **24,** wherein N is between 10 and 1000.

30. A method of removing leakage in a continuous wave radar system (10) as recited in claim **24,** wherein said average is based upon 5 to 50 samples.

31. A method of removing leakage in a continuous wave radar system (10) as recited in claim **24,** wherein said continuous wave radar system (10) comprises a multiple beam array (12: 12.1, 12.2, 12.3), said stored leakage signal is distinct for each beam location (12.1, 12.2, 12.3) in said multiple beam array (12: 12.1, 12.2, 12.3), and said step of performing a leakage calibration (350) is performed separately for each beam location (12.1, 12.2, 12.3) in said multiple beam array (12: 12.1, 12.2, 12.3).

32. A system for removing leakage in a continuous wave radar system (10), comprising:

a. a differential amplifier (36), the input of said differential amplifier (36) operatively coupled to a down converted radar signal (300) within the continuous wave radar system (10);
b. a signal processor (30);
c. a memory operatively connected to said signal processor (30) for storing a leakage signal;
d. a digital to analog converter (34) operatively connected to said signal processor (30);
e. a gain controlled amplifier (38), wherein the input of said gain controlled amplifier is operatively connected to the output of said differential amplifier (36) and the gain control of said gain controlled amplifier (38) is operatively connected to said signal processor (30);

f. a first analog to digital converter (26.1), the input of said first analog to digital converter (26.1) operatively connected to the output of said gain controlled amplifier (38), the output of said first analog to digital converter (26.1) operatively connected to said signal processor (30), wherein said first analog to digital converter (26.1) provides an in-phase signal (I) to said signal processor (30);

g. a quadrature phase shifter (28), the input of said quadrature phase shifter (28) operatively connected to the output of said gain controlled amplifier (38); and

h. a second analog to digital converter (26.2), the input of said second analog to digital converter (26.2) operatively connected to the output of said quadrature phase shifter (28), the output of said second analog to digital converter (26.2) operatively connected to said signal processor (30), wherein said second analog to digital converter (26.2) provides a quadrature-phase signal (Q) to said signal processor (30), said signal processor (30) calculates a leakage calibration signal from said in-phase (I) and said quadrature-phase (Q) signals, said signal processor (30) outputs said leakage calibration signal to said digital to analog converter (34), said differential amplifier (36) subtracts the signal at the output of said digital to analog converter (34) from said down converted radar signal (300), said leakage calibration signal is calculated (352) from at least one average of said in-phase signal (I) and said quadrature-phase signal (Q), and said leakage calibration signal is responsive to (354, 356) at least one variance waveform associated with said leakage calibration signal.

33. A system for removing leakage in a continuous wave radar system (10) as recited in claim **32**, wherein the gain of said gain controlled amplifier (38) is responsive to the dynamic range of said first (26.1) and second (26.2) analog to digital converters.

**Patentansprüche**

1. Ein Verfahren zum Entfernen von Streuverlusten in einem Dauerstrichradarsystem (10), das umfasst:

a. Abziehen (206, 301) mindestens eines für ein Verlustsignal charakteristischen Signals von einem entsprechenden mindestens einen für ein herunterkonvertiertes Radarrücklaufsignal (200, 300) charakteristischen Signal, um ein resultierendes Signal zu bilden, wobei das mindestens eine für ein herunterkonvertiertes Radarrücklaufsignal (200, 300) charakteristische Signal und/oder das resultierende Signal eine sich wiederholenden Sequenz von Frequenzen umfasst **gekennzeichnet durch**
b. Auswerten (216, 316) eines Zustandes des resultierenden Signals; und
c. Bestimmen aus diesem Zustand, ob Streuverlustkalibrierung (250, 350) durchgeführt werden soll oder nicht, wobei die Streuverlustkalibrierung (250, 350) umfasst:

i) Erzeugen (252-260, 352) eines gemittelten Verlustsignals;
ii) Berechnen (262, 354) mindestens einer Varianzwellenform, die dem gemittelten Verlustsignal zugeordnet ist;
iii) Vergleichen (262, 354) mindestens eines Maßes der mindestens einen Varianzwellenform mit einem entsprechenden mindestens einen Schwellenwert; und
iv) Speichern (264, 364) eines Signals in Antwort auf das gemittelte Verlustsignal, wobei der Schritt des Speicherns auf den Schritt des Vergleichens (262, 354) des mindestens einen Maßes der mindestens einen Varianzwellenform mit dem entsprechenden mindestens einen Schwellenwert reagiert.

2. Ein Verfahren zum Entfernen von Streuverlusten in einem Dauerstrichradarsystem (10) wie in Anspruch 1 aufgeführt, wobei

a. der Schritt des Abziehens (206, 301) des mindestens einen für ein Verlustsignal charakteristischen Signals von dem entsprechenden mindestens einen für das herunterkonvertierte Radarrücklaufsignal (200, 300) charakteristische Signal umfasst:

i). Abtasten (202) der gleichphasigen (I) und quadratur-phasigen (Q) Komponenten eines herunterkonvertierten Radarrücklaufsignals (200), wobei jede Komponente eine zugeordnete Wellenform umfasst, die eine sich wiederholende Sequenz von Frequenzen umfasst; und
ii). Abziehen (206) der gleichphasigen (I) und quadratur-phasigen (Q) Komponenten eines gespeicherten Verlustsignals, um ein resultierendes Signal zu bilden;

b. die Schritte des Auswertens (216, 316) des Zustandes des resultierenden Signals und des Bestimmens aus diesem Zustand, ob die Verlustkalibrierung (250, 350) durchgeführt werden soll oder nicht, umfassen:

i) Vergleichen (214) mindestens eines ersten Maßes des resultierenden Signals mit einem entsprechenden mindestens einen ersten Schwellenwert; und

ii) Durchführen einer Verlustkalibrierung (250), wenn das mindestens eine erste Maß den entsprechenden mindestens einen Schwellenwert für m von N aufeinanderfolgenden Abtastwerten (216) des Radarrücklaufsignals (200) übersteigt;

c. der Schritt des Erzeugens (250) des gemittelten Verlustsignals umfasst:

i) Berechnen (252) eines laufenden Mittelwertes aufeinanderfolgender gleichphasiger (I) Wellenformen des herunterkonvertierten Radarrücklaufsignals (200) durch Mitteln (252) zugehöriger Elemente der sich wiederholenden Sequenz über aufeinanderfolgende sich wiederholende Sequenzen, um eine zugeordnete gemittelte Gleichphasenwellenform zu erzeugen; und

ii) Berechnen eines laufenden Mittelwertes aufeinanderfolgender quadratur-phasiger (Q) Wellenformen des herunterkonvertierten Radarrücklaufsignals (200) durch Mitteln (252) zugehöriger Elemente der sich wiederholenden Sequenz über aufeinanderfolgende sich wiederholende Sequenzen, um eine zugeordnete gemittelte Quadraturphasenwellenform zu erzeugen, wobei die Gleichphasenwellenform und die Quadraturphasenwellenform das gemittelte Verlustsignal darstellen;

d. der Schritt des Vergleichens mindestens einen Maßes der mindestens einen Varianzwellenform mit einem entsprechenden mindestens einen Schwellenwert umfasst:

Vergleichen (262) mindestens eines zweiten Maßes der mindestens einen Varianzwellenform mit einem entsprechenden mindestens einen zweiten Schwellenwert; und

e. der Schritt des Speicherns des Signals in Antwort auf das gemittelte Verlustsignal umfasst:

Speichern (264) des gemittelten Verlustsignals als das gespeicherte Verlustsignal, wenn das mindestens eine zweite Maß der mindestens einen Varianzwellenform geringer ist als der entsprechende mindestens eine zweite Schwellenwert.

3. Ein Verfahren zum Entfernen von Streuverlusten in einem Dauerstrichradarsystem (10) wie in Anspruch 2 aufgeführt, wobei das gespeicherte Verlustsignal anfangs auf einen vorberechneten Wert gesetzt wird.

4. Ein Verfahren zum Entfernen von Streuverlusten in einem Dauerstrichradarsystem (10) wie in Anspruch 2 aufgeführt, weiterhin umfassend den Schritt des Skalierens (260) des gespeicherten Verlustsignals in Antwort auf die Größe des herunterkonvertierten Radarrücklaufsignals (200).

5. Ein Verfahren zum Entfernen von Streuverlusten in einem Dauerstrichradarsystem (10) wie in Anspruch 4 aufgeführt, wobei das gespeicherte Verlustsignal skaliert (260) wird, um die selbe Spitzengröße wie das herunterkonvertierte Radarrücklaufsignal (200) zu haben.

6. Ein Verfahren zum Entfernen von Streuverlusten in einem Dauerstrichradarsystem (10) wie in Anspruch 2 aufgeführt, wobei das mindestens eine erste Maß die maximale Amplitude der Verlustkomponente des resultierenden Signals umfasst.

7. Ein Verfahren zum Entfernen von Streuverlusten in einem Dauerstrichradarsystem (10) wie in Anspruch 6 aufgeführt, wobei das erste Maß innerhalb eines vorbestimmten Frequenzbereichs getestet wird (254), der der Verlustkomponente des resultierenden Signals entspricht.

8. Ein Verfahren zum Entfernen von Streuverlusten in einem Dauerstrichradarsystem (10) wie in Anspruch 2 aufgeführt, wobei das mindestens eine erste Maß die Modalität der Verlustkomponente des resultierenden Signals umfasst.

9. Ein Verfahren zum Entfernen von Streuverlusten in einem Dauerstrichradarsystem (10) wie in Anspruch 8 aufgeführt, wobei der mindestens eine erste Schwellenwert die Anzahl der nahe beieinanderliegenden Spitzenwerte in der Verlustkomponente des resultierenden Signals umfasst.

10. Ein Verfahren zum Entfernen von Streuverlusten in einem Dauerstrichradarsystem (10) wie in Anspruch 8 aufgeführt, wobei das mindestens eine erste Maß das Moment dritter Ordnung in der Entfernungsdomäne der Verlustkomponente des resultierenden Signals umfasst.

11. Ein Verfahren zum Entfernen von Streuverlusten in einem Dauerstrichradarsystem (10) wie in Anspruch 2 aufgeführt, weiterhin umfassend den Schritt des Skalierens (260) des gemittelten Verlustsignals bevor das gemittelte Verlustsignal gespeichert wird.

12. Ein Verfahren zum Entfernen von Streuverlusten in einem Dauerstrichradarsystem (10) wie in Anspruch 10 aufgeführt, wobei das Dauerstrichradarsystem (10) schrittlinear frequenzmoduliert ist, weiterhin umfassend den Schritt des Bearbeitens (208, 210) des herunterkonvertierten Radarrücklaufsignals (200), um den Abstand zu null oder mehr Zielen zu messen, die durch das Radarrücklaufsignal (200) dargestellt werden.

13. Ein Verfahren zum Entfernen von Streuverlusten in einem Dauerstrichradarsystem (10) wie in Anspruch 10 ausgeführt, wobei der Schritt des Bearbeitens (208, 210) des herunterkonvertierten Radarrücklaufsignals (200) die Schritte der Fast-Fourier-Transformation (208) und Constant False Alarm Rate-Feststellungsbearbeitung (210) umfasst.

14. Ein Verfahren zum Entfernen von Streuverlusten in einem Dauerstrichradarsystem (10) wie in Anspruch 13 ausgeführt, wobei der Schritt der Constant False Alarm Rate-Feststellungsbearbeitung (210) mindestens ein Maß bereitstellt, das aus einer Gruppe ausgewählt wird, die aus dem Entfernungszellenort, der Radarstrahlzahl, der Amplitude des Radarrücklaufsignals (200) und der Amplitude des Hintergrunds des Radarrücklaufsignals (200) besteht.

15. Ein Verfahren zum Entfernen von Streuverlusten in einem Dauerstrichradarsystem (10) wie in Anspruch 14 aufgeführt, weiterhin umfassend den Schritt des Entfernens von durch den Schritt der Constant False Alarm Rate-Feststellungsbearbeitung (210) entdeckten Zielen aus dem gemittelten Verlustsignal (212, 254-258) umfasst.

16. Ein Verfahren zum Entfernen von Streuverlusten in einem Dauerstrichradarsystem (10) wie in Anspruch 15 aufgeführt, wobei der Schritt des Entfernens von Zielen die Schritte des Anwendens einer Fast-Fourier-Transformation (254) auf das gemittelte Verlustsignal, um ein Signal in der Frequenzdomäne zu bilden, Verwenden eines Sperrfilters (256) auf das Signal in der Frequenzdomäne in Antwort auf die durch den Constant False Alarm Rate-Feststellungsbearbeitungsschritt (210) entdeckten Ziele, um ein sperrgefiltertes Signal zu erzeugen, und des Anwendens einer inversen Fast-Fourier-Transformation (258) auf das sperrgefilterte Signal umfasst, um einen Ersatz für das gemittelte Verlustsignal zu bilden.

17. Ein Verfahren zum Entfernen von Streuverlusten in einem Dauerstrichradarsystem (10) wie in Anspruch 14 aufgeführt, wobei der Schritt des Durchführens einer Verlustkalibrierung (250) durchgeführt wird, wenn keine Ziele in dem Constant False Alarm Rate-Feststellungsbearbeitungsschritt (210) entdeckt werden.

18. Ein Verfahren zum Entfernen von Streuverlusten in einem Dauerstrichradarsystem (10) wie in Anspruch 2 aufgeführt, wobei das Dauerstrichradarsystem (10) eine Mehrstrahlenanordnung (12: 12.1, 12.2, 12.3) umfasst, das gespeicherte Verlustsignal für jeden Strahlort (12.1, 12.2, 12.3) in der Mehrstrahlenanordnung (12: 12.1, 12.2, 12.3) ausgeprägt ist und der Schritt des Durchführens einer Verlustkalibrierung (250) für jeden Strahlort (12.1, 12.2, 12.3) in der Mehrstrahlenanordnung (12: 12.1, 12.2, 12.3) separat durchgeführt wird.

19. Ein Verfahren zum Entfernen von Streuverlusten in einem Dauerstrichradarsystem (10) wie in Anspruch 1 ausgeführt, wobei

a. der Schritt des Abziehens mindestens eines für ein Verlustsignal charakteristischen Signals von dem entsprechenden mindestens einen für ein herunterkonvertiertes Radarrücklaufsignal (300) charakteristischen Signal umfasst:

Abziehen (301) eines gespeicherten Verlustsignals von einem herunterkonvertierten Radarrücklaufsignal (300), um ein resultierendes Signal zu bilden, wobei das herunterkonvertierte Radarrücklaufsignal (300) eine sich wiederholende Sequenz von Frequenzen umfasst;

b. die Schritte des Evaluierens des Zustandes des resultierenden Signals und Bestimmens aus diesem Zustand, ob eine Verlustkalibrierung durchgeführt wird oder nicht, umfassen:

Durchführen einer Verlustkalibrierung (350) bei jedem N-ten Auftreten (316) der sich wiederholenden Sequenz von Frequenzen;

c. der Schritt des Erzeugens des gemittelten Verlustsignals umfasst:

Berechnen eines Durchschnitts von aufeinanderfolgenden resultierenden Signalen durch Mitteln (352) zugehöriger Elemente der sich wiederholenden Sequenz über aufeinanderfolgende sich wiederholende Sequenzen, um das gemittelte Verlustsignal zu erzeugen; und

d. der Schritt des Speicherns des Signals in Antwort auf das gemittelte Verlustsignal umfasst:

i) Kombinieren des gespeicherten Verlustsignals mit dem gemittelten Verlustsignal in Übereinstimmung mit einem Kalman-Filter (356), um ein aktualisiertes Verlustsignal zu bilden, wenn mindestens ein Maß der mindestens einen Varianzwellenform geringer ist als der entsprechende mindestens eine Schwellenwert (354); und
ii) Speichern (364) des aktualisierten Verlustsignals als das gespeicherte Verlustsignal.

20. Ein Verfahren zum Entfernen von Streuverlusten in einem Dauerstrichradarsystem (10) wie in Anspruch 19 aufgeführt, wobei der Kalman-Filter (356) auf die Rauschstatistiken des Radarsystems (10) anspricht.

21. Ein Verfahren zum Entfernen von Streuverlusten in einem Dauerstrichradarsystem (10) wie in Anspruch 19 aufgeführt, wobei der Kalman-Filter (356) auf die Verluststabilität des Radarsystems (10) anspricht.

22. Ein Verfahren zum Entfernen von Streuverlusten in einem Dauerstrichradarsystem (10) wie in Anspruch 19 aufgeführt, wobei der Kalman-Filter (356) auf die Stabilität des Radarsystems (10) anspricht.

23. Ein Verfahren zum Entfernen von Streuverlusten in einem Dauerstrichradarsystem (10) wie in Anspruch 19 aufgeführt, weiterhin umfassend den Schritt des Aktualisierens (358) mindestens einer Gain-Matrix des Kalman-Filters (356).

24. Ein Verfahren zum Entfernen von Streuverlusten in einem Dauerstrichradarsystem (10) wie in Anspruch 1 aufgeführt, wobei

a. der Schritt des Abziehens mindestens eines für ein Verlustsignal charakteristischen Signals von dem entsprechenden mindestens einen für ein herunterkonvertiertes Radarrücklaufsignal (300) charakteristischen Signal umfasst:

i). Konvertieren (366) eines gespeicherten Verlustsignals von einer digitalen in eine analoge Form, um ein analoges Verlustsignal zu bilden; und
ii). Abziehen (301) des analogen Verlustsignals von einem herunterkonvertierten Radarrücklaufsignal (300), um ein resultierendes Signal zu bilden;

b. die Schritte des Auswertens des Zustandes des resultierenden Signals und des Bestimmens aus diesem Zustand, ob die Verlustkalibrierung durchgeführt werden soll oder nicht, umfassen:

i). Abtasten (302) der gleichphasigen (I) und quadratur-phasigen (Q) Komponenten des resultierenden Signals, wobei jede Komponente eine zugeordnete Wellenform umfasst, die eine sich wiederholende Sequenz von Frequenzen umfasst; und
ii). Durchführen einer Verlustkalibrierung bei jedem N-ten Auftreten (316) der sich wiederholenden Sequenz von Frequenzen;

c. der Schritt des Erzeugens des gemittelten Verlustsignals umfasst:

i) Berechnen eines Durchschnitts von aufeinanderfolgenden gleichphasigen (I) Wellenformen des herunterkonvertierten Radarrücklaufsignals (300) durch Mitteln (352) zugehöriger Elemente der sich wiederholenden Sequenz über aufeinanderfolgende sich wiederholende Sequenzen, um eine zugeordnete gemittelte Gleichphasenwellenform zu erzeugen;
ii) Berechnen eines Durchschnitts aufeinanderfolgender quadratur-phasigen (Q) Wellenformen des herunterkonvertierten Radarrücklaufsignals (300) durch Mitteln (352) zugehöriger Elemente der sich wiederholenden Sequenz über aufeinanderfolgende sich wiederholende Sequenzen, um eine zugeordnete gemittelte Quadraturphasenwellenform zu erzeugen, wobei die Gleichphasenwellenform und die Quadraturphasenwellenform das gemittelte Verlustsignal darstellen; und

d. der Schritt des Speicherns des Signals in Antwort auf das gemittelte Verlustsignal umfasst:

Ersetzen (356, 364) des gespeicherten Verlustsignals mit einem Signal aus dem gemittelten Verlustsignal, wenn das mindestens eine Maß der mindestens einen Varianzwellenform geringer ist als der entsprechende mindestens eine Schwellenwert.

25. Ein Verfahren zum Entfernen von Streuverlusten in einem Dauerstrichradarsystem (10) wie in Anspruch 24 aufgeführt, weiterhin umfassend den Schritt des Skalierens (303) des resultierenden Signals.

26. Ein Verfahren zum Entfernen von Streuverlusten in einem Dauerstrichradarsystem (10) wie in Anspruch 25 aufgeführt, wobei der Schritt des Abtastens der gleichphasigen (I) und quadratur-phasigen (Q) Komponenten des resultierenden Signals den Schritt des Konvertierens (302) des resultierenden Signals von einer analogen in eine digitale Form mit mindestens einem Analog-Digital-Konverter (26.1, 26.2) umfasst, und der Schritt des Skalierens (303) des resultierenden Signals auf den dynamischen Bereich des mindestens einen Analog-Digital-Konverters (26.1, 26.2) anspricht.

27. Ein Verfahren zum Entfernen von Streuverlusten in einem Dauerstrichradarsystem (10) wie in Anspruch 24 aufgeführt, wobei das Dauerstrichradarsystem (10) schrittlinear frequenzmoduliert ist, weiterhin umfassend den Schritt des Bearbeitens des herunterkonvertierten Radarrücklaufsignals (300), um die Entfernung zu null oder mehr Zielen zu messen (308, 310), die durch das Radarrücklaufsignal (300) dargestellt werden.

28. Ein Verfahren zum Entfernen von Streuverlusten in einem Dauerstrichradarsystem (10) wie in Anspruch 27 aufgeführt, wobei der Schritt des Bearbeitens des herunterkonvertierten Radarrücklaufsignals (300) die Schritte einer Fast-Fourier-Transformation (308) und einer Constant False Alarm Rate-Feststellungsbearbeitung (310) umfasst, und der Schritt der Constant False Alarm Rate-Feststellungsbearbeitung (310) mindestens ein Maß bereitstellt, das aus der Gruppe gewählt wird, die den Entfernungszellenort, die Radarstrahlzahl, die Amplitude des Radarrücklaufsignals (300) und die Amplitude des Hintergrunds des Radarrücklaufsignals (300) umfasst.

29. Ein Verfahren zum Entfernen von Streuverlusten in einem Dauerstrichradarsystem (10) wie in Anspruch 24 aufgeführt, wobei N zwischen 10 und 1000 ist.

30. Ein Verfahren zum Entfernen von Streuverlusten in einem Dauerstrichradarsystem (10) wie in Anspruch 24 aufgeführt, wobei der Durchschnitt auf 5 bis 50 Abtastungen basiert.

31. Ein Verfahren zum Entfernen von Streuverlusten in einem Dauerstrichradarsystem (10) wie in Anspruch 24 aufgeführt, wobei das Dauerstrichradarsystem (10) eine Mehrstrahlenanordnung (12: 12.1, 12.2, 12.3) umfasst, das gespeicherte Verlustsignal für jeden Strahlort (12.1, 12.2, 12.3) in der Mehrstrahlenanordnung (12: 12.1, 12.2, 12.3) ausgeprägt ist und der Schritt des Durchführens einer Verlustkalibrierung (250) separat für jeden Strahlort (12.1, 12.2, 12.3) in der Mehrstrahlenanordnung (12: 12.1, 12.2, 12.3) durchgeführt wird.

32. Ein System zum Entfernen von Streuverlusten in einem Dauerstrichradarsystem (10), umfassend:

a. einen Differenzverstärker (36), wobei der Eingang des Differenzverstärkers (36) wirkend mit einem herunterkonvertierten Radarsignal (300) innerhalb des Dauerstrichradarsystems (10) gekoppelt ist;
b. einen Signalprozessor (30);
c. einen mit dem Signalprozessor (30) zum Speichern eines Verlustsignals wirkend verbundenen Speicher;
d. einen mit dem Signalprozessor (30) wirkend verbundenen Digital-Analog-Konverter (34);
e. einen verstärkungsgesteuerten Verstärker (38), wobei der Eingang des verstärkungsgesteuerten Verstärkers wirkend mit dem Ausgang des Differenzverstärkers (36) verbunden ist und die Verstärkungssteuerung des verstärkungsgesteuerten Verstärkers (38) wirkend mit dem Signalprozessor (30) verbunden ist;
f. einen ersten Analog-Digital-Konverter (26.1), wobei der Eingang des ersten Analog-Digital-Konverters (26.1) wirkend mit dem Ausgang des verstärkungsgesteuerten Verstärkers (38) verbunden ist, der Ausgang des ersten Analog-Digital-Konverters (26.1) wirkend mit dem Signalprozessor (30) verbunden ist, wobei der erste Analog-Digital-Konverter (26.1) dem Signalprozessor (30) ein Gleichphasensignal (I) bereitstellt;

g. einen Quadraturphasenschieber (28), wobei der Eingang des Quadraturphasenschiebers (28) wirkend mit dem Ausgang des verstärkungsgesteuerten Verstärkers (38) verbunden ist; und

h. einen zweiten Analog-Digital-Konverter (26.2), wobei der Eingang des zweiten Analog-Digital-Konverters (26.2) wirkend mit dem Ausgang des Quadraturphasenschiebers (28) verbunden ist, der Ausgang des zweiten Analog-Digital-Konverters (26.2) wirkend mit dem Signalprozessor (30) verbunden ist, wobei der zweite Analog-Digital-Konverter (26.2) dem Signalprozessor (30) ein Quadraturphasensignal (Q) bereitstellt, der Signalprozessor (30) ein Verlustkalibrierungssignal aus den Gleichphasen- (I) und Quadraturphasen-(Q)-Signalen berechnet, der Signalprozessor (30) das Verlustkalibrierungssignal an den Digital-Analog-Konverter (34) ausgibt, der Differenzverstärker (36) das Signal an dem Ausgang des Digital-Analog-Konverters (34) von dem herunterkonvertierten Radarsignal (300) abzieht, das Verlustkalibrierungssignal aus mindestens einem Durchschnitt des Gleichphasensignals (I) und des Quadraturphasensignals (Q) berechnet (352) wird, und das Verlustkalibrierungssignal auf mindestens eine dem Verlustkalibrierungssignal zugeordnete Varianzwellenform anspricht (354, 356).

**33.** Ein System zum Entfernen von Streuverlusten in einem Dauerstrichradarsystem (10) wie in Anspruch 32 aufgeführt, wobei die Verstärkung des verstärkungsgesteuerten Verstärkers (38) auf den dynamischen Bereich der ersten (26.1) und zweiten (26.2) Analog-Digital-Konverter anspricht.

## Revendications

**1.** Procédé pour supprimer une fuite dans un système radar à ondes entretenues (10), comprenant :

a. la soustraction (206, 301) d'au moins un signal représentatif d'un signal de fuite, d'au moins un signal correspondant représentatif d'un signal d'écho radar à fréquence abaissée (200, 300) afin de former un signal résultant, dans lequel au moins un dudit au moins un signal représentatif d'un signal d'écho radar à fréquence abaissée (200, 300) et dudit signal résultant comprend une séquence récurrente de fréquences ; **caractérisé par**

b. l'évaluation (216, 316) d'une condition dudit signal résultant ; et

c. une détermination, à partir de ladite condition, pour effectuer ou pas un calibrage de fuite (250, 350), dans lequel ledit calibrage de fuite (250, 350) comprend :

i) la génération (252 - 260, 352) d'un signal de fuite moyenné ;

ii) le calcul (262, 354) d'au moins un signal de variance associé audit signal de fuite moyenné ;

iii) la comparaison (262, 354) d'au moins une mesure dudit au moins un signal de variance avec au moins un seuil correspondant ; et

iv) le stockage (264, 364) d'un signal sensible audit signal de fuite moyenné, dans lequel l'étape de stockage est sensible à l'étape de comparaison (262, 354) de ladite au moins une mesure dudit au moins un signal de variance avec au moins un seuil correspondant.

**2.** Procédé pour supprimer une fuite dans un système radar à ondes entretenues (10) selon la revendication 1, dans lequel :

a. l'étape de soustraction (206, 301) dudit au moins un signal représentatif d'un signal de fuite, dudit au moins un signal correspondant représentatif dudit signal d'écho radar à fréquence abaissée (200, 300) comprend :

i) l'échantillonnage (202) des composantes en phase (I) et en quadrature de phase (Q) d'un signal d'écho radar à fréquence abaissée (200), chaque dite composante comprenant un signal associé comprenant une séquence récurrente de fréquences ; et

ii) la soustraction (206) des composantes en phase (I) et en quadrature de phase (Q) d'un signal de fuite stocké afin de former un signal résultant ;

b. les étapes d'évaluation (216, 316) de ladite condition dudit signal résultant et de détermination à partir de ladite condition d'effectuer ou pas ledit calibrage de fuite (250, 350), comprennent :

i) la comparaison (214) d'au moins une première mesure à partir dudit signal résultant, avec au moins un premier seuil correspondant ; et

ii) l'exécution d'un calibrage de fuite (250) si ladite au moins une première mesure dépasse ledit au moins un seuil correspondant pour m échantillons successifs parmi N (216) dudit signal d'écho radar (200) ;

c. l'étape de génération (250) dudit signal de fuite moyenné comprend :

i) le calcul (252) d'une moyenne glissante desdits signaux en phase (I) successifs dudit signal d'écho radar à fréquence abaissée (200) en moyennant (252) les éléments respectifs de ladite séquence récurrente sur des séquences récurrentes successives afin de générer un signal en phase moyenné associé ; et
ii) le calcul d'une moyenne glissante desdits signaux en quadrature de phase (Q) successifs dudit signal d'écho radar à fréquence abaissée (200) en moyennant (252) les éléments respectifs de ladite séquence récurrente sur des séquences récurrentes successives afin de générer un signal en quadrature de phase moyenné associé, ledit signal en phase et ledit signal en quadrature de phase constituant ledit signal de fuite moyenné ;

d. l'étape de comparaison d'au moins une mesure dudit au moins un signal de variance avec au moins un seuil correspondant, comprend ;
la comparaison (262) d'au moins une deuxième mesure dudit au moins un signal de variance avec au moins un deuxième seuil correspondant ; et
e. l'étape de stockage dudit signal sensible audit signal de fuite moyenné comprend :

le stockage (264) dudit signal de fuite moyenné en tant que dit signal de fuite stocké si ladite au moins une deuxième mesure dudit au moins un signal de variance est inférieure audit au moins un deuxième seuil correspondant.

3. Procédé pour supprimer une fuite dans un système radar à ondes entretenues (10) selon la revendication 2, dans lequel ledit signal de fuite stocké est fixé au début à une valeur préalablement calculée.

4. Procédé pour supprimer une fuite dans un système radar à ondes entretenues (10) selon la revendication 2, comprenant de plus l'étape de mise à l'échelle (260) dudit signal de fuite stocké, sensible à l'amplitude dudit signal d'écho radar à fréquence abaissée (200).

5. Procédé pour supprimer une fuite dans un système radar à ondes entretenues (10) selon la revendication 4, dans lequel ledit signal de fuite stocké (260) est mis à l'échelle pour avoir la même amplitude de crête que celle dudit signal d'écho radar à fréquence abaissée (200).

6. Procédé pour supprimer une fuite dans un système radar à ondes entretenues (10) selon la revendication 2, dans lequel ladite au moins une première mesure comprend l'amplitude maximum de la composante de fuite dudit signal résultant.

7. Procédé pour supprimer une fuite dans un système radar à ondes entretenues (10) selon la revendication 6, dans lequel ladite première mesure est testée (254) à l'intérieur d'une plage de fréquences prédéterminée correspondant à ladite composante de fuite dudit signal résultant.

8. Procédé pour supprimer une fuite dans un système radar à ondes entretenues (10) selon la revendication 2, dans lequel ladite au moins une première mesure comprend la modalité de la composante de fuite dudit signal résultant..

9. Procédé pour supprimer une fuite dans un système radar à ondes entretenues (10) selon la revendication 8, dans lequel ledit au moins un premier seuil comprend le nombre de crêtes très proches dans la composante de fuite dudit signal résultant.

10. Procédé pour supprimer une fuite dans un système radar à ondes entretenues (10) selon la revendication 8, dans lequel ladite au moins une première mesure comprend le moment du troisième ordre dans le domaine de portée de ladite composante de fuite dudit signal résultant.

11. Procédé pour supprimer une fuite dans un système radar à ondes entretenues (10) selon la revendication 2, comprenant de plus l'étape de mise à l'échelle (260) dudit signal de fuite moyenné, avant de stocker ledit signal de fuite moyenné.

12. Procédé pour supprimer une fuite dans un système radar à ondes entretenues (10) selon la revendication 10, dans lequel ledit système radar à ondes entretenues (10) est modulé en fréquence par échelon linéaire, comprenant de plus l'étape de traitement (208, 210) dudit signal d'écho radar à fréquence abaissée (200) afin de mesurer la portée jusqu'à zéro cible, ou plus, représentées par ledit signal d'écho radar (200).

13. Procédé pour supprimer une fuite dans un système radar à ondes entretenues (10) selon la revendication 10, dans lequel l'étape de traitement (208, 210) dudit signal d'écho radar à fréquence abaissée (200) comprend les étapes de transformation de Fourier rapide (208) et de traitement de détection du taux de fausse alarme constant (210).

14. Procédé pour supprimer une fuite dans un système radar à ondes entretenues (10) selon la revendication 13, dans lequel ladite étape de traitement de détection du taux de fausse alarme constant (210) fournit au moins une mesure sélectionnée dans le groupe composé de l'emplacement de la case distance, du nombre de faisceaux de radar, de l'amplitude dudit signal d'écho radar (200) et de l'amplitude du fond dudit signal d'écho radar (200).

15. Procédé pour supprimer une fuite dans un système radar à ondes entretenues (10) selon la revendication 14, comprenant de plus l'étape de suppression de cibles détectées par ladite étape de traitement de détection du taux de fausse alarme constant (210), dudit signal de fuite moyenné (212, 254 - 258).

16. Procédé pour supprimer une fuite dans un système radar à ondes entretenues (10) selon la revendication 15, dans lequel l'étape de suppression de cibles comprend les étapes de transformation de Fourier rapide (254) dudit signal de fuite moyenné afin de former un signal dans le domaine fréquentiel, de filtrage d'une bande étroite (256) dudit signal dans le domaine fréquentiel sensible auxdites cibles détectées par ladite étape de traitement de détection du taux de fausse alarme constant (210) afin de former un signal filtré par un filtre à bande étroite, et de transformation de Fourier rapide inverse (258) dudit ladite signal filtré par un filtre à bande étroite afin de former un signal de remplacement dudit signal de fuite moyenné.

17. Procédé pour supprimer une fuite dans un système radar à ondes entretenues (10) selon la revendication 14, dans lequel ladite étape d'exécution d'un calibrage de fuite (250) est exécutée quand aucune cible n'est détectée dans ladite étape de traitement de détection du taux de fausse alarme constant (210).

18. Procédé pour supprimer une fuite dans un système radar à ondes entretenues (10) selon la revendication 2, dans lequel ledit système radar à ondes entretenues (10) comprend un groupement de faisceaux multiples (12 : 12.1, 12.2, 12.3), ledit signal de fuite stocké est distinct pour chaque emplacement de faisceau (12.1, 12.2, 12.3) dans ledit groupement de faisceaux multiples (12 : 12.1, 12.2, 12.3), et ladite étape d'exécution d'un calibrage de fuite (250) est exécutée séparément pour chaque emplacement de faisceau (12.1, 12.2, 12.3) dans ledit groupement de faisceaux multiples (12 : 12.1, 12.2, 12.3).

19. Procédé pour supprimer une fuite dans un système radar à ondes entretenues (10) selon la revendication 1, dans lequel :

a. l'étape de soustraction dudit au moins un signal représentatif d'un signal de fuite, dudit au moins un signal correspondant représentatif dudit signal d'écho radar à fréquence abaissée (300) comprend :

la soustraction (301) d'un signal de fuite stocké, d'un signal d'écho radar à fréquence abaissée (300) afin de former un signal résultant, dans lequel ledit signal d'écho radar à fréquence abaissée (300) comprend une séquence récurrente de fréquences ;

b. les étapes d'évaluation de ladite condition dudit signal résultant et de détermination à partir de ladite condition d'effectuer ou pas ledit calibrage de fuite, comprennent :

l'exécution d'un calibrage de fuite (350) toutes les N occurrences (316) de ladite séquence récurrente de fréquences ;

c. l'étape de génération dudit signal de fuite moyenné comprend :

le calcul d'une moyenne de signaux résultants successifs en moyennant (de 352) les éléments respectifs de ladite séquence récurrente sur des séquences récurrentes successives afin de générer ledit signal de fuite moyenné ; et

d. l'étape de stockage dudit signal sensible audit signal de fuite moyenné comprend :

i) une combinaison du signal de fuite stocké avec ledit signal de fuite moyenné selon un filtre de Kalman (356) afin de former un signal de fuite mis à jour si ladite au moins une mesure dudit au moins un signal de variance est inférieure audit au moins un seuil correspondant (354) ; et
ii) le stockage (364) dudit signal de fuite mis à jour en tant que dit signal de fuite stocké.

20. Procédé pour supprimer une fuite dans un système radar à ondes entretenues (10) selon la revendication 19, dans lequel ledit filtre de Kalman (356) est sensible aux statistiques de bruit du système radar (10).

21. Procédé pour supprimer une fuite dans un système radar à ondes entretenues (10) selon la revendication 19, dans lequel ledit filtre de Kalman (356) est sensible à la stabilité de fuite du système radar (10).

22. Procédé pour supprimer une fuite dans un système radar à ondes entretenues (10) selon la revendication 19, dans lequel ledit filtre de Kalman (356) est sensible à la stabilité du système radar (10).

23. Procédé pour supprimer une fuite dans un système radar à ondes entretenues (10) selon la revendication 19, comprenant de plus l'étape de mise à jour (358) d'au moins une matrice de gain dudit filtre de Kalman (356).

24. Procédé pour supprimer une fuite dans un système radar à ondes entretenues (10) selon la revendication 1, dans lequel :

a. l'étape de soustraction dudit au moins un signal représentatif d'un signal de fuite, dudit au moins un signal correspondant représentatif dudit signal d'écho radar à fréquence abaissée (300) comprend :

i) la conversion (366) d'un signal de fuite stocké à partir d'une forme numérique - analogique afin de former un signal de fuite analogique ; et
ii) la soustraction (301) dudit signal de fuite analogique, d'un signal d'écho radar à fréquence abaissée (300) afin de former un signal résultant ;

b. les étapes d'évaluation de ladite condition dudit signal résultant et de détermination à partir de ladite condition d'effectuer ou pas ledit calibrage de fuite, comprennent :

i) l'échantillonnage (302) des composantes en phase (I) et en quadrature de phase (Q) dudit signal résultant, chaque dite composante comprenant un signal associé comprenant une séquence récurrente de fréquences ; et
ii) l'exécution d'un calibrage de fuite toutes les N occurrences (316) de ladite séquence récurrente de fréquences ;

c. l'étape de génération dudit signal de fuite moyenne comprend :

i) le calcul d'une moyenne desdits signaux en phase (I) successifs dudit signal d'écho radar à fréquence abaissée (300) en moyennant (352) les éléments respectifs de ladite séquence récurrente sur des séquences récurrentes successives afin de générer un signal en phase moyenné associé ;
ii) le calcul d'une moyenne desdits signaux en quadrature de phase (Q) successifs dudit signal d'écho radar à fréquence abaissée (300) en moyennant (352) les éléments respectifs de ladite séquence récurrente sur des séquences récurrentes successives afin de générer un signal en quadrature de phase moyenné associé, ledit signal en phase et ledit signal en quadrature de phase constituant ledit signal de fuite moyenné ; et

d. l'étape de stockage dudit signal sensible audit signal de fuite moyenné comprend :

le remplacement (356, 364) dudit signal de fuite stocké par un signal provenant dudit signal de fuite moyenné si ladite au moins une mesure dudit au moins un signal de variance est inférieure audit au moins un seuil correspondant.

25. Procédé pour supprimer une fuite dans un système radar à ondes entretenues (10) selon la revendication 24, comprenant de plus l'étape de mise à l'échelle (303) dudit signal résultant.

**26.** Procédé pour supprimer une fuite dans un système radar à ondes entretenues (10) selon la revendication 25, dans lequel l'étape d'échantillonnage des composantes en phase (I) et en quadrature de phase (Q) dudit signal résultant, inclut l'étape de conversion (302) dudit signal résultant provenant de la forme analogique - numérique avec au moins un convertisseur analogique - numérique (26.1, 26.2), et l'étape de mise à l'échelle (303) dudit signal résultant est sensible à la gamme dynamique dudit au moins un convertisseur analogique - numérique (26.1, 26.2).

**27.** Procédé pour supprimer une fuite dans un système radar à ondes entretenues (10) selon la revendication 24, dans lequel ledit système radar à ondes entretenues (10) est modulé en fréquence par échelon linéaire, comprenant de plus l'étape de traitement (308, 310) dudit signal d'écho radar à fréquence abaissée (300) afin de mesurer (308, 310) la portée jusqu'à zéro cible, ou plus, représentées par ledit signal d'écho radar (300).

**28.** Procédé pour supprimer une fuite dans un système radar à ondes entretenues (10) selon la revendication 27, dans lequel l'étape de traitement dudit signal d'écho radar à fréquence abaissée (300) comprend les étapes de transformation de Fourier rapide (308) et de traitement de détection du taux de fausse alarme constant (310), et ladite étape de traitement de détection du taux de fausse alarme constant (310) fournit au moins une mesure sélectionnée dans le groupe composé de l'emplacement de la case distance, du nombre de faisceaux de radar, de l'amplitude dudit signal d'écho radar (300) et de l'amplitude du fond dudit signal d'écho radar (300).

**29.** Procédé pour supprimer une fuite dans un système radar à ondes entretenues (10) selon la revendication 24, dans lequel N est compris entre 10 et 1000.

**30.** Procédé pour supprimer une fuite dans un système radar à ondes entretenues (10) selon la revendication 24, dans lequel ladite moyenne est basée sur un nombre d'échantillons compris entre 5 et 50.

**31.** Procédé pour supprimer une fuite dans un système radar à ondes entretenues (10) selon la revendication 24, dans lequel ledit système radar à ondes entretenues (10) comprend un groupement de faisceaux multiples (12 : 12.1, 12.2, 12.3), ledit signal de fuite stocké est distinct pour chaque emplacement de faisceau (12.1, 12.2, 12.3) dans ledit groupement de faisceaux multiples (12 : 12.1, 12.2, 12.3), et ladite étape d'exécution d'un calibrage de fuite (350) est exécutée séparément pour chaque emplacement de faisceau (12.1, 12.2, 12.3) dans ledit groupement de faisceaux multiples (12 : 12.1, 12.2, 12.3).

**32.** Système pour supprimer une fuite dans un système radar à ondes entretenues (10), comprenant :

a. un amplificateur différentiel (36), l'entrée dudit amplificateur différentiel (36) étant reliée de manière fonctionnelle à un signal radar à fréquence abaissée (300) à l'intérieur du système radar à ondes entretenues (10) ;
b. un processeur de signaux (30) ;
c. une mémoire reliée de manière fonctionnelle audit processeur de signaux (30) pour stocker un signal de fuite ;
d. un convertisseur numérique - analogique (34) relié de manière fonctionnelle audit processeur de signaux (30) ;
e. un amplificateur à gain commandé (38), dans lequel l'entrée dudit amplificateur à gain commandé est reliée de manière fonctionnelle à la sortie dudit amplificateur différentiel (36) et la commande de gain dudit amplificateur à gain commandé (38) est reliée de manière fonctionnelle audit processeur de signaux (30) ;
f. un premier convertisseur analogique - numérique (26.1), l'entrée dudit premier convertisseur analogique - numérique (26.1) étant reliée de manière fonctionnelle à la sortie dudit amplificateur à gain commandé (38), la sortie dudit premier convertisseur analogique - numérique (26.1) étant reliée de manière fonctionnelle audit processeur de signaux (30), dans lequel ledit premier convertisseur analogique - numérique (26.1) fournit un signal en phase (I) audit processeur de signaux (30) ;
g. un déphaseur en quadrature (28), l'entrée dudit déphaseur en quadrature (28) étant reliée de manière fonctionnelle à la sortie dudit amplificateur à gain commandé (38) ; et
h. un deuxième convertisseur analogique - numérique (26.2), l'entrée dudit deuxième convertisseur analogique - numérique (26.2) étant reliée de manière fonctionnelle à la sortie dudit déphaseur en quadrature (28), la sortie dudit deuxième convertisseur analogique - numérique (26.2) étant reliée de manière fonctionnelle audit processeur de signaux (30), dans lequel ledit deuxième convertisseur analogique - numérique (26.2) fournit un signal en quadrature de phase (Q) audit processeur de signaux (30), ledit processeur de signaux (30) calcule un signal de calibrage de fuite à partir desdits signaux en phase (I) et en quadrature de phase (Q), ledit processeur de signaux (30) délivre ledit signal de calibrage de fuite audit convertisseur numérique - analogique (34), ledit amplificateur différentiel (36) soustrait le signal au niveau de la sortie dudit convertisseur numérique - analogique (34), dudit signal radar à fréquence abaissée (300), ledit signal de calibrage de fuite est calculé (352) à partir d'une moyenne au moins dudit signal en phase (I) et dudit signal en quadrature de phase (Q), et ledit signal de calibrage de fuite est sensible (354, 356) à au moins un signal de variance associé audit signal de calibrage de fuite.

33. Système pour supprimer une fuite dans un système radar à ondes entretenues (10) selon la revendication 32, dans lequel le gain dudit amplificateur à gain commandé (38) est sensible à la gamme dynamique desdits premier (26.1) et deuxième (26.2) convertisseurs analogique - numérique.

**FIG. 1.**

**FIG. 2**

```
200 ──  Down-Converted
         Radar Signal

202 ──  Read A/D Converters

204 ──  DC Bias & I/Q Imbalance
                    I, Q

206 ──  Subtract Leakage  ◄───  Store Leakage Signals  ── 264

208 ──  Range FFT                Variance Check  ── 262

210 ──  CFAR Detection           Scaling  ── 260

212 ──  Report List              Inverse FFT  ── 258

                                 Notch Filter  ── 256

214 ──  Leakage Signal Test      FFT  ── 254

                                 Integration  ── 252

216 ──  Leakage      Yes
        Bad for N ─────────────────▲
        Consecutive              250    M cycles
        Scans
           No

220 ──  Continue
        Normal
        Processing
```

# FIG. 3

316

Nth Scan
Since Last
Calibration
Update?

No

300

Down-Converted
Radar Signal

301

Subtract Leakage

303

Variable Gain

302

Read A/D Converters

304

DC Bias & I/Q Imbalance

I, Q

366

D/A Convert
Stored Leakage
Signal

Store Leakage
Signal

364

Yes

350

352

Average M
Chirps in Dwell

354

Variance Check

356

Update Leakage
with New Data

358

Update Kalman
Gain Matrices

308

Range FFT

310

CFAR Detection

312

Report List

314

Doppler Processing

320

Continue
Normal
Processing

# FIG 4

# FIG 5

# FIG 6

Leakage peak
before
calibration

Medium sized
target before
calibration

Small target
before
calibration
(hidden)

# FIG 7

Leakage
Signal
Reduced By
~ 40 dB

Medium sized
target after
calibration

Small target
after
calibration